(19) **Europäisches Patentamt European Patent Office Office européen des brevets**

(11) **EP 4 357 407 A1**

(12) **EUROPEAN PATENT APPLICATION**

(43) Date of publication:
**24.04.2024 Bulletin 2024/17**

(21) Application number: **22202496.0**

(22) Date of filing: **19.10.2022**

(51) International Patent Classification (IPC):
**C08L 23/06** (2006.01)     **C08L 23/04** (2006.01)
**C08L 23/08** (2006.01)     **C08F 2/00** (2006.01)
**C08F 110/02** (2006.01)     **C08F 210/02** (2006.01)

(52) Cooperative Patent Classification (CPC):
(C-Sets available)
**C08L 23/06; C08F 110/02; C08F 210/16;**
C08L 2205/035; C08L 2207/20             (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Thai Polyethylene Co., Ltd.**
**21150 Rayong (TH)**

(72) Inventors:
• **Suk-em, Chatdao**
**10800 Bangkok (TH)**

• **Phutthasattha, Kunthalee**
**10800 Bangkok (TH)**
• **Supphasrirongjaroen, Piyawat**
**10800 Bangkok (TH)**
• **Cheevasrirungruang, Watcharee**
**10800 Bangkok (TH)**
• **Tangchareetsakull, Pornthip**
**10800 Bangkok (TH)**

(74) Representative: **Erbacher, Martin**
**Boehmert & Boehmert**
**Anwaltspartnerschaft mbB**
**Pettenkoferstrasse 22**
**80336 München (DE)**

(54) **MULTIMODAL POLYETHYLENE COMPOSITION, RESIN COMPOSITION COMPRISING THE MULTIMODAL POLYETHYLENE COMPOSITION AND A POST-CONSUMER RESIN, A METHOD FOR PREPARING THE SAME AND AN ARTICLE COMPRISING THE SAME**

(57)     The present invention relates to a multimodal polyethylene composition and to a resin composition comprising the multimodal polyethylene composition and a post-consumer resin. The invention further relates to a method for preparing the resin composition. Finally, the invention relates to an article comprising the multimodal polyethylene composition and a post-consumer resin.

EP 4 357 407 A1

(52) Cooperative Patent Classification (CPC): (Cont.)

C-Sets
**C08F 210/16, C08F 2/001;**
**C08F 210/16, C08F 2/14;**
**C08F 210/16, C08F 4/6543;**
**C08L 23/06, C08L 23/0815, C08L 23/0815;**
**C08L 23/06, C08L 23/0815, C08L 23/0815,**
**C08L 23/12, C08L 23/0815, C08L 23/04;**
C08F 210/16, C08F 210/08, C08F 2500/12,
C08F 2500/07, C08F 2500/30, C08F 2500/31

**Description**

TECHNICAL FIELD

The present invention relates to a multimodal polyethylene composition and to a resin composition comprising the multimodal polyethylene composition and a post-consumer resin. The invention further relates to a method for preparing the resin composition. Finally, the invention relates to an article comprising the multimodal polyethylene composition and a post-consumer resin.

BACKGROUND

Plastic waste is one of the most increasing environmental concerns. One of the most important approaches on the reduction of plastic wastes is the plastic recycling. Through plastic recycling process, plastic waste is collected and re-converted into useable products. The recycling process can be of mechanical or chemical nature. Although various plastic recycling processes have been developed, there is still a need to overcome the economic and technological scalability challenges. In mechanical recycling of plastic waste, the used plastic is reintroduced into the plastic life cycle after collection and sorting of the post-consumer resin (PCR) and/or post-industrial recycled (PIR) materials.

The utilization of plastic waste is the global trend that growth speedily in commercialization. Plastic waste is collected and converted into recycled plastic pellet through the mechanical or chemicals recycling process. Although various plastic recycling process has been developed, they have to overcome the economic and technological scalability challenges. The wildly know process is the mechanical recycle which the process has been developed cover the small factory scale and large recycle plant. The challenge of mechanical recycling is the inferior of the mechanical strength compared with the virgin materials. The degradation from utilization and recycling process as well as impurity in waste collection mainly influent on the deterioration of materials.

Especially, the environmental stress crack resistance (ESCR) one of important properties of polymer in many product applications. The limited ESCR properties in recycled plastic results in the limitation of plastic waste utilization.

In order to improve the PCR properties for various application uses for blow molding, cap and closure, film or pipe, the excellent virgin polymer of multimodal polyethylene composition is need for a blend with improved properties.

In order to obtain polyethylene composition comprising significant amounts of PCR and having the desired stress crack resistance for blow molding application, it is generally known to blend the PCR material with virgin materials.

US 10,894,877 B2 and US 2021/0095107 A1 disclose HDPE compositions obtained from blending two different virgin polyethylene resins with two different PCR resins at about near equal ratio and 0.5-2.0 w/w% antioxidant additive. The total PCR components used in these works could be further increased while further improvement is needed for higher ESCR. Moreover, the antioxidant additives added during compounding process in these disclosures introduce additional amount of harmful chemicals from recycle process.

Generally, plastic additives, especially antioxidants, are added in small amounts during resin manufacturing or compounding stages to prevent degradation during processing, storage, and use. However, many types of antioxidants are known as hazardous substances with toxicity to living animals and for causing environmental problems. Cumulative additions of these chemicals during recycling processes raise major concerns to health and environmental impacts. However, in the absence of these additional antioxidants, especially when using PCR resins and compositions with high PCR content, the performance is inferior compared to their virgin counterparts when re-introduced into plastic lifecycle. Thus, there is also a need to find PCR compositions with high PCR content having good performance when compared to virgin material without the need for additional plastic stabilizers.

EP 3 074 464 B1 describes a process to produce HDPE compositions having PCR resin where the virgin HDPE having HLMI between 5-75 g/10 min, and PCR resin having HLMI between 40-70 g/10 min. However, the resulting polyethylene composition with PCR having ESCR 10% between 57-103 hours which is not satisfactory for chemical resistance application. Thus, there is still need for improvements on polyethylene PCR composition with high ESCR to serve for such applications.

It is, therefore, an object of the present invention to provide an polyethylene composition for preparing a PCR-containing resin composition overcoming drawbacks of the prior art (wherein said polyethylene composition may be referred to as "booster composition"), especially to provide a polyethylene composition suitable to improve the stiffness, such as tensile strength at yield, tensile strength at break, elongation at yield, elongation at break, tensile modulus or strain hardening modulus, of a PCR-containing resin composition obtained by mixing said polyethylene composition with a composition comprising a PCR resin.

DETAILED DESCRIPTION

The above object is achieved in accordance with the subject matter of the independent claims. Further embodiments result from the subclaims and the following detailed description

The present invention relates to a multimodal polyethylene composition comprising;

(A) 40 to 60 percent by weight of a low molecular weight polyethylene, with respect to the total weight of the multimodal polyethylene composition, wherein the low molecular weight polyethylene is a homopolymer; and the low molecular weight polyethylene has a weight average molecular weight (Mw) from 20,000 to 90,000 g/mol, preferably from 25,000 to 90,000 g/mol, more preferably from 30,000 to 80,000 g/mol, and even more preferably 35,000 to 70,000 g/mol, measured by Gel Permeation Chromatography,

(B) 10 to 30 percent by weight of a first high molecular weight polyethylene, with respect to the total weight of the multimodal polyethylene composition, wherein the first high molecular weight polyethylene is a homopolymer or a copolymer; and the first high molecular weight polyethylene has a weight average molecular weight (Mw) from 140,000 to 1,400,000 g/mol, preferably from 140,000 to 1,200,000 g/mol, more preferably from 140,000 to 1,000,000 g/mol, even more preferably from 200,000 to 900,000 g/mol, and most preferably from 300,000 to 800,000 g/mol, measured by Gel Permeation Chromatography; and

(C) 15 to 40 percent by weight of a second high molecular weight polyethylene, with respect to the total weight of the multimodal polyethylene composition, wherein the second high molecular weight polyethylene is a homopolymer or a copolymer, and the second high molecular weight polyethylene has a weight average molecular weight (Mw) of from 130,000 to 1,100,000 g/mol, preferably from 140,000 to 1,000,000 g/mol, more preferably from 150,000 to 950,000 g/mol, even more preferably from 200,000 to 900,000 g/mol, and most preferably from 350,000 to 900,000 g/mol, measured by Gel Permeation Chromatography;

wherein

the first high molecular weight polyethylene differs from the second high molecular weight polyethylene with respect to the weight average molecular weight thereof.

The present invention relates further to a resin composition, which may be referred to as a PCR-rein-containing resin composition, comprising:

(a) 5 to 45 percent by weight, with respect to the total weight of the resin composition, of the multimodal polyethylene composition according to the invention; and

(b) 5 to 45 percent by weight, with respect to the total weight of the resin composition, of a post-consumer resin.

The present invention relates further to a method for preparing a resin composition comprising a post-consumer resin, the method comprising a step of blending the multimodal polyethylene composition according to the invention and the post-consumer resin.

Finally, the invention relates to an article comprising the multimodal polyethylene composition according to the invention and a post-consumer resin.

It was surprisingly found that the inventive multimodal polyethylene composition can improve the stiffness of a PCR-containing resin composition when being mixed therewith.

Hereinafter, the present invention is now described in detail with respect to the preferred embodiments. Various aspects of the present invention can be fully understood by way of examples. It is to be understood that the invention is not limited to particular methods, components, compositions, or devices as described.

The inventive multimodal polyethylene composition may also be referred to as booster composition in accordance the invention meaning a composition suitable to improve the properties, especially the stiffness, respectively the stiffness related properties, such as tensile strength at yield, tensile modulus etc., of a PCR-containing resin composition, especially a polyethylene PCR-containing resin composition when being mixed therewith.

The multimodal polyethylene composition may comprise the low molecular weight polyethylene, the first high molecular weight polyethylene, and the second high molecular weight polyethylene in a total amount selected from the group consisting of at least 70 wt.-%, at least 80 wt.-%, at least 90 wt.-%, at least 95 wt.-%, at least 98 wt.-%, and at least 99 wt.-%, c. The multimodal polyethylene composition may essentially consist of the low molecular weight polyethylene, the first high molecular weight polyethylene, and the second high molecular weight polyethylene. The multimodal polyethylene composition may consist of the low molecular weight polyethylene, the first high molecular weight polyethylene, and the second high molecular weight polyethylene.

The multimodal polyethylene composition may be a trimodal polyethylene composition.

Preferably, the multimodal polyethylene composition comprises the low molecular weight polyethylene in an amount of 40 to 50 percent by weight, more preferably in an amount of 40 to 46 percent by weight, even more preferred in an amount of 42 to 44 percent by weight, such as about 43 percent by weight, with respect to the total weight of the multimodal polyethylene composition.

Preferably, the low molecular weight polyethylene has a weight average molecular weight (Mw) from 20,000 to 90,000 g/mol, preferably from 25,000 to 90,000 g/mol, more preferably from 30,000 to 80,000 g/mol, such as about 35,000 to 70,000 g/mol (about 38,400 g/mol) measured by Gel Permeation Chromatography.

Preferably, the low molecular weight polyethylene has a MI$_2$ from 10 to 1000 g/10 min, more preferably from 100 to 900 g/10 min even more preferred from 150 to 800 g/10 min, most preferably from 200 to 750 g/mol such as about 700 g/10 min according to ASTM D 1238.

Preferably, the low molecular weight polyethylene has a density from 0.962 to 0.966 g/cm$^3$, more preferably from 0.962 to 0.966 g/cm$^3$ such as about 0.965 according to ASTM D 1505.

Preferably, the multimodal polyethylene composition comprises the first high molecular weight polyethylene in an amount of 13 to 16 percent by weight, more preferably in an amount of 15 to 24 percent by weight, even more preferred in an amount of 18 to 20 percent by weight, such as about 19 percent by weight, with respect to the total weight of the multimodal polyethylene composition.

Preferably, the first high molecular weight polyethylene is a copolymer and the comonomer selected from 1-butene or 1-hexene.

Preferably, the first high molecular weight polyethylene has a weight average molecular weight (Mw) from 140,000 to 1,400,000 g/mol, preferably from 140,000 to 1,200,000 g/mol, more preferably from 140,000 to 1,000,000 g/mol, even more preferably from 200,000 to 900,000 g/mol, and most preferably from 300,000 to 800,000 g/mol, even more preferred from 400,000 to 750,000 g/mol, such as about 590,000 g/mol measured by Gel Permeation Chromatography.

Preferably, the multimodal polyethylene composition comprises the second high molecular weight polyethylene in an amount of 30 to 40 percent by weight, more preferably in an amount of 35 to 40 percent by weight, even more preferred in an amount of 37 to 39 percent by weight, such as about 38 percent by weight, with respect to the total weight of the multimodal polyethylene composition.

Preferably, the second high molecular weight polyethylene is a copolymer and the comonomer selected from 1-butene or 1-hexene.

Preferably, the second high molecular weight polyethylene has a weight average molecular weight (Mw) from 130,000 to 1,100,000 g/mol, preferably from 140,000 to 1,000,000 g/mol, more preferably from 150,000 to 950,000 g/mol, even more preferably from 200,000 to 900,000 g/mol, and most preferably from 350,000 to 900,000 g/mol, for example 130,000 to 500,000 g/mol, preferably from 140,000 to 450,000 g/mol such as about 425,000 g/mol measured by Gel Permeation Chromatography.

Preferably, the multimodal polyethylene composition has a molecular weight distribution from 13 to 33, more preferably from 25 to 33 even more preferred from 30 to 32, such as about 30.9, measured by Gel Permeation Chromatography.

The trimodal polyethylene composition (a) may have a weight average molecular weight from 130,000 to 400,000 g/mol, preferably from 140,000 to 350,000 g/mol, more preferably from 150,000 to 300,000, most preferably from 160,000 to 250,000 g/mol, and/or a number average molecular weight from 5,000 to 15,000 g/mol, preferably 7,000 to 13,000 g/mol, more preferably from 10,000 to 12,000 g/mol, and/or a Z average molecular weight from 950,000 to 3,000,000 g/mol, preferably 1,000,000 to 2,500,000 g/mol, more preferably from 1,000,000 to 2,000,000 g/mol as measured by Gel Permeation Chromatography (GPC), respectively.

Preferably, the multimodal polyethylene composition has a density from 0.935 to 0.965 g/cm$^3$ more preferably from 0.940 to 0.965 g/cm$^3$ even more preferred from 0.940 to 0.960 g/cm$^3$, most preferably 0.940 to 0.960 g/cm$^3$ such as about 0.945 g/cm$^3$ or about 0.957 g/cm$^3$ or 0.952 g/cm$^3$ or 0.954 g/cm$^3$ according to ASTM D 1505.

Preferably, the multimodal polyethylene composition has a MI$_2$ from 0.01 to 0.60 g/10 min, preferably from 0.01 to 0.50 g/10 min, more preferably from 0.02 to 0.4 g/10 min, even more preferred from 0.03 to 0.4 g/10 min, such as about 0.03 to 0.35 g/10 min according to ASTM D 1238.

Preferably, the multimodal polyethylene composition has a tensile strength at yield from 18 to 22 MPa, such as about 19.5 to 20.5 MPa.

Preferably, the multimodal polyethylene composition has a tensile strength at break from 22 to 30 MPa, such as about 25 to 26 MPa.

Preferably, the multimodal polyethylene composition has an elongation at yield from 15 to 20 %, such as about 17.0 to 18.0 %.

Preferably, the multimodal polyethylene composition has an elongation at break from 700 to 800 %, such as from 730 to 750 %.

Preferably, the multimodal polyethylene composition has a tensile modulus from 700 to 850 MPa, such as about 770 to 790 MPa.

Preferably, the multimodal polyethylene composition has a Charpy impact strength at -20°C from 5 to 50 kJ/m$^2$,

such as about 10 to 15 kJ/m$^2$.

Preferably, the multimodal polyethylene composition has a Charpy impact strength at o°C from 10 to 80 kJ/m$^2$, such as about 20 to 25 kJ/m$^2$.

Preferably, the multimodal polyethylene composition has a Charpy impact strength at 23°C from 10 to 60 kJ/m$^2$, such as about 25 to 30 kJ/m$^2$.

Preferably, the multimodal polyethylene composition has a strain hardening modulus from 40 to 50.

The present invention relates further to a resin composition, comprising:

(a) 5 to 45 percent by weight, with respect to the total weight of the resin composition, of the multimodal polyethylene composition according to the invention; and

(b) 5 to 45 percent by weight, with respect to the total weight of the resin composition, of a post-consumer resin.

Preferably, the resin composition comprises the multimodal polyethylene composition according to the invention in an amount from 10 to 40 percent by weight, more preferably from 10 to 30 percent by weight, even more preferred from 10 to 25 percent by weight, such as about 15 to 20 percent by weight, with respect to the total weight of the resin composition.

Preferably, the resin composition comprises the post-consumer resin in an amount from 10 to 40 percent by weight, more preferably from 20 to 40 percent by weight, even more preferred from 25 to 35 percent by weight, such as about 30 percent by weight, with respect to the total weight of the resin composition.

Preferably, the post-consumer resin is a post-consumer polyethylene resin, more preferably a post-consumer high density polyethylene resin.

The term "Post Consumer resin", which may be abbreviated as "PCR", is used to denote the component of the domestic waste, which consists of polyethylene, such as high density polyethylene packaging. The term "post-consumer" as used herein may refer to waste or recycled products consisting of or incorporating, such as in an amount of at least 50 wt.-%, such as at least 90 wt.-%, material discarded by end users rather than generated during a manufacturing process.

Preferably, the post-consumer polyethylene resin comprises non-black polyethylene, for example is selected from, but not limited to, a group consisting of white colored bottle source or natural colored bottle source. Preferably, the white colored bottle source or natural colored bottle source is selected from personal care bottle, health care bottle, milk bottle, or saline bottle or combination thereof.

Preferably, the post-consumer polyethylene resin has a MI$_2$ selected from the group consisting of from 0.05 to 5 g/10 min, 0.1 to 3 g/min, 0.5 to 2.5 g/min, 1 to 3 g/10 min; and from 1.1 to 1.5 g/10 min, such as about 0.3 or 1.31 g/10 min; determined according to ASTM D1238 at 190°C with load 2.16 kg.

Preferably, the post-consumer polyethylene resin has a density selected from the group consisting of from 0.910 to 0.975 g/cm$^3$, 0.920 to 0.975 g/cm$^3$ from 0.940 to 0.975 g/cm$^3$, from 0.950 to 0.975 g/cm$^3$ from 0.950 to 0.960 g/cm$^3$; from 0.952 to 0.958 g/cm$^3$, from 0.954 to 0.956 g/cm$^3$, such as about 0.9549 g/10 min.

Preferably, the post-consumer polyethylene resin has a tensile strength at yield from 20 to 35 MPa, 24 to 30 MPa, such as about 24 to 26 MPa.

Preferably, the post-consumer polyethylene resin has a tensile strength at break from 8 to 24 MPa, 10 to 18 MPa, such as about 13 to 15 MPa.

Preferably, the post-consumer polyethylene resin has an elongation at yield from 5 to 13 %, such as about 9.0 to 10.0 %.

Preferably, the post-consumer polyethylene resin has an elongation at break from 200 to 900 %, 300 to 500 %, such as from 400 to 450 %.

Preferably, the post-consumer polyethylene resin has a tensile modulus from 700 to 1300 MPa, more preferably from 900 to 1,000 MPa, such as about 960 to 980 MPa.

Preferably, the post-consumer polyethylene resin has a Charpy impact strength at -20°C from 1 to 20 kJ/m$^2$, more preferably from 1 to 15 kJ/m$^2$, most preferably from 1 to 4.5 kJ/m$^2$, such as about 3.8 to 4.3 kJ/m$^2$.

Preferably, the post-consumer polyethylene resin has a Charpy impact strength at o°C from 1 to 20 kJ/m$^2$, more preferably from 1 to 15 kJ/m$^2$, most preferably from 1 to 10 kJ/m$^2$, such as about 4 to 5 kJ/m$^2$.

Preferably, the post-consumer polyethylene resin has a Charpy impact strength at 23°C from 1 to 40 kJ/m$^2$, more preferably from 1 to 30 kJ/m$^2$, most preferably from 1 to 25 kJ/m$^2$, especially from 1 to 15 kJ/m$^2$, such as about 6 to 7 kJ/m$^2$.

Preferably, the resin composition further comprises (c) 10 to 90 percent by weight, with respect to the total weight of the resin composition, of a virgin resin.

The term "virgin" as used herein refers to a material not discarded by end users but rather generated during a manufacturing process.

Preferably, the resin composition comprises the virgin resin in an amount from 20 to 80 percent by weight, more preferably from 30 to 70 percent by weight, further preferred 40 to 60 percent by weight, even more preferred from 45 to 60 percent by weight, such as about 50 to 55 percent by weight with respect to the total weight of the resin composition.

Preferably, the virgin resin is a polyethylene resin, more preferably is a bimodal polyethylene composition.

Preferably, the bimodal polyethylene composition comprises an ethylene homopolymer and an ethylene copolymer comprising a comonomer in an amount of at least 0.55 mol% with respect to the total amount of monomer in the ethylene copolymer, wherein the ethylene copolymer has a higher weight average molecular weight than the ethylene homopolymer, the bimodal polyethylene composition has a density in the range of 0.950-0.965 $g/cm^3$, a melt flow rate ($MFR_2$) of at least 0.3 g/10 minutes, a weight average molecular weight of at least 100,000 g/mol, a viscosity at an angular frequency of 0.01 [1/s], $\eta$ 0.01 of at least 20,000 Pa.s, wherein the bimodal polyethylene composition has an Isothermal Crystallization Half-Time, which is less than 10 minute at 123°C and a Full Notch Creep Test of at least 60 hours.

Preferably, the comonomer in the copolymer of the bimodal polyethylene composition is selected from the group consisting of $C_{4-10}$ alpha-olefins, preferably 1-butene, 1-pentene, 1-hexene, 1-heptene, 1-octene or mixtures thereof.

Preferably, the bimodal polyethylene composition has a weight average molecular weight from 100,000 g/mol to 300,000 g/mol, preferably from 150,000 g/mol to 200,000 g/mol measured using gel permeation chromatography.

Preferably, the bimodal polyethylene composition has a polydispersity index from 13 to 23, preferably from 15 to 20 measured using gel permeation chromatography.

The bimodal polyethylene composition may comprise 40 to 60%wt. of the first polyethylene homopolymer fraction and 40 to 60 %wt. of the second polyethylene copolymer fraction and preferably 45 to 55 %wt. of the first polyethylene homopolymer fraction and 45 to 55 %wt. of the second polyethylene copolymer fraction

Preferably, the amount of co-monomer in the copolymer of the bimodal polyethylene composition is in the range of 0.55 mol% to 1.5 mol%, preferably from 0.55 mol% to 1.2 mol%, with respect to the total amount of monomer in the ethylene copolymer.

It is further preferred that the melt flow rate $MFR_2$ of the bimodal polyethylene composition is in the range of 0.3 to 2.0 g/10 minutes, more preferably from 0.6 to 1.0 g/10 min, such as from 0.7 to 0.9 g/10 min.

Preferably, the bimodal polyethylene composition has a density from 0.952 to 0.960 $g/cm^3$, more preferably from 0.954 to 0.958 $g/cm^3$, such as about 0.956 $g/cm^3$.

The bimodal polyethylene composition may further preferably comprise a nucleating agent, preferably in an amount from 80 to 2000 ppm.

More preferred, the nucleating agent is selected from cyclohexane dicarboxylic acid, calcium salt, zinc salt, zinc stearate and mixtures thereof.

It is also preferred that the calcium salt is selected from calcium hexahydrophthalate or calcium glycerolate, and/or wherein the zinc salt is selected from zinc hexahydrophthalate or zinc glycerolate.

Exemplary respective bimodal polyethylene compositions are described, for example, in EP 3 293 212 A1, especially in examples 4 and 5 thereof.

Preferably, the bimodal polyethylene composition has a tensile strength at yield from 20 to 30 MPa, such as about 25 to 27 MPa.

Preferably, the bimodal polyethylene composition has a tensile strength at break from 10 to 18 MPa, such as about 14 to 16 MPa.

Preferably, the bimodal polyethylene composition has an elongation at yield from 5 to 13 %, such as about 7.0 to 9.0 %.

Preferably, the bimodal polyethylene composition has an elongation at break from 300 to 500 %, such as from 450 to 470 %.

Preferably, the bimodal polyethylene composition has a tensile modulus from 900 to 1,100 MPa, such as about 1,000 to 1,050 MPa.

Preferably, the bimodal polyethylene composition has a strain hardening modulus from 10 to 25, preferably from 16 to 20, such as about 18.2.

Preferably, the resin composition further comprises 0.001 to 2 percent by weight, more preferably from 0.01 to 1 percent by weight, most preferred from 0.1 to 0.2 percent by weight with respect to the total weight of the resin composition, of an additive, wherein the additive is preferably an antioxidant or a mixture of two or more antioxidants.

The additives may be added to the polymer composition of the virgin resin, such as the bimodal polyethylene composition, the multimodal polyethylene composition or the PCR or during blending of PCR and/or virgin resin and/or multimodal polyethylene composition.

In addition, the composition can contain other additives to enhance thermal and/or UV stability during manufacturing, storing of the material, or during processing and end-use, for example antioxidant, UV absorber, UV stabilizer, and also neutralizer. The total composition of one or more additives content is in the range of 0.01-5 %wt.

Phenolic antioxidants are the most widely used antioxidants for polymer. In this invention, primary and secondary antioxidants are normally selected from sterically hindered phenols, organic phosphites or phosphonites and mixtures thereof. The concentration normally is at least 0.2%wt.

UV stabilizer and absorber are generally used to prevent or slow down degradation caused by exposure to ultraviolet radiation. Exposure to sunlight causes products to break down over time. These stabilizers can be added in lower concentrations because only a small amount is needed to be effective. The concentration normally is within the range of 0.2%wt.

The use of additives, such as metal stearates to neutralize acid residues has been selected from the acid scavenger or neutralizer: zinc stearate, calcium stearate, zinc oxide, and hydrotalcite. The amount of neutralizer used varies to not less than 0.05%wt.

The resin composition may comprise the multimodal polyethylene composition, the virgin resin (if present) and the post-consumer resin in a total amount selected from the group consisting of at least 70 wt.-%, at least 80 wt.-%, at least 90 wt.-%, at least 95 wt.-%, at least 98 wt.-%, and at least 99 wt.-%, c. The resin composition may essentially consist of the multimodal polyethylene composition, the virgin resin (if present) and the post-consumer resin. The resin composition may consist of the multimodal polyethylene composition, the virgin resin (if present) and the post-consumer resin. In all cases, the composition may, in addition, comprise minor amounts (not more than 1 wt.-% with respect to the total weight of the multimodal polyethylene composition) of additives, such as an antioxidant.

The present invention relates to a method for preparing a resin composition comprising a post-consumer resin, the method comprising a step of blending the multimodal polyethylene composition according to the invention and the post-consumer resin.

The blended resin of PCR and multimodal polyethylene composition can be pelletized, for example through a single screw extruder such as Haake Rheomex 19/25 OS L/D 25 at a temperature setting of preferably 180 - 190°C, a preferred screw speed of about 80 rpm, with resident time in the single screw extruder of preferably more than 15 seconds to ensure the homogeneity and similarity of the material that pass through the extruder in the molding process. The preferred resident time of the blended compositions within the single screw extruder depended on the input and output amount of the resulting polyethylene composition, and can be adjusted accordingly.

Preferably, the method comprising a step of blending the multimodal polyethylene composition according to the invention, the virgin resin and the post-consumer resin.

The method for preparation of bimodal polyethylene composition may be as follows.

A bimodal polyethylene composition comprising a) low molecular weight (LMW) HDPE having $MFR_2$ in the range of 100 to 700 g/10 min, and density $\geq 0.970$ g/cm$^3$ and b) high molecular weight (HMW) HDPE having $MFR_5$ 0.20-0.40 g/10 min and density 0.940-0.960 g/cm$^3$ is prepared. The bimodal polyethylene composition may be produced in accordance with two-stage cascade slurry polymerization process uses catalysts include coordination catalysts of a transition metal called Ziegler-Natta (ZN) that was described in the Hungarian patent application number 0800771R, especially in example 1 thereof.

The LMW HDPE resin is a homopolymer polymerized in the first reactor in the absence of comonomer. The HMW PE resin produced in the second reactor is copolymer containing 1-butene or 1-hexene content of 0.25 - 3.0 %mol.

The bimodal polyethylene composition may comprise 40 to 60%wt. of the first polyethylene homopolymer fraction and 40 to 60%wt. of the second polyethylene copolymer fraction and preferably 45 to 55 %wt. of the first polyethylene homopolymer fraction and 45 to 55 %wt. of the second polyethylene copolymer fraction

The method may further comprise a step or a variety of steps for preparing the multimodal polyethylene composition.

The multimodal polyethylene composition may be produced via a reactor system for producing the multimodal polyethylene composition by polymerization. The system may comprise a first reactor, a second reactor, a third reactor and a hydrogen removal unit placed between the first reactor and the second reactor.

The hydrogen depleted polyethylene from the first reactor affects the polymerization of high molecular weight in the subsequent reactors. In particular, high molecular weight leads to improved mechanical properties of polyethylene.

A catalyst for producing the multimodal polyethylene composition of this invention may be selected from a Ziegler-Natta catalyst; a single site catalyst including metallocene-bases catalyst and non- metallocene-bases catalyst, or chromium-based catalyst; or combinations thereof. Preferably, conventional Ziegler-Natta catalyst or single site catalyst is used. The catalyst is typically used together with co-catalysts which are well known in the art.

The polymerization in the first reactor, the second reactor and the third reactor may be carried out in the presence of an inert hydrocarbon. The inert hydrocarbon is preferably aliphatic hydrocarbon including hexane, isohexane, heptane, isobutane. Preferably, hexane (most preferred n-hexane) is used.

Catalyst, ethylene, hydrogen and optionally $\alpha$-olefin comonomer may be reacted in the first reactor. The entire product obtained from the first reactor may then be transferred to the hydrogen removal unit to remove 98.0 to 99.8%, such as from 98.0 to 99.1% by weight of hydrogen, unreacted gas and some volatiles from the slurry obtained in the first reactor before being fed to the second reactor to continue the polymerization.

The polyethylene obtained from the second reactor is a bimodal polyethylene which is the combination of the

8

product obtained from the first reactor and that of the second reactor. This bimodal polyethylene is then fed to the third reactor to continue the polymerization. The final multimodal polyethylene composition (a) obtained from the third reactor is the mixture of the polymers from the first, the second and the third reactor. Polyethylenes prepared in each of the first, the second, and the third reactor (corresponding to the constituents (A) to (C) of the inventive multimodal polyethylene composition (a), respectively) differ from each other, for example, with respect to the weight average molecular weight thereof. It may be provided that the first high molecular weight polyethylene has a higher weight average molecular weight than the second high molecular weight polyethylene, or vice-versa.

The polymerization in the first, the second, and the third reactor may be conducted under different process conditions. As a result, the polyethylenes obtained in each reactor (corresponding to the constituents (A) to (C), respectively) may have a different molecular weight. The different process conditions can be the variation in concentration of ethylene and hydrogen in the vapor phase, of the temperature or the amount of comonomer being fed to each reactor. Appropriate conditions for obtaining a respective homo- or copolymer of desired properties, in particularly of desired molecular weight, are well known in the art. The person skilled in the art is enabled on basis of his general knowledge to choose the respective conditions on this basis.

Preferably, low molecular weight polyethylene is produced in the first reactor, while a first high molecular weight polyethylene is produced in the second reactor and a second high molecular weight polyethylene is produced in the third reactor.

The term first reactor refers to the stage where the low molecular weight polyethylene (LMW) is produced. The term second reactor refers to the stage where the first high molecular weight polyethylene (HMW1) is produced. The term third reactor refers to the stage where the second high molecular weight polyethylene (HMW2) is produced.

The term LMW refers to the low molecular weight polyethylene polymer polymerized in the first reactor having a weight average molecular weight (Mw) of 20,000-90,000 g/mol.

The term HMW1 refers to the first high molecular weight polyethylene polymer polymerized in the second reactor having a weight average molecular weight (Mw) of from 140,000 to 1,400,000 g/mol.

The term HMW2 refers to the second high molecular weight polyethylene polymer polymerized in the third reactor having the weight average molecular weight (Mw) of from 130,000 to 1,100,000 g/mol.

The LMW may be produced in the first reactor in the absence of comonomer in order to obtain a homopolymer.

The ethylene may be polymerized in the first reactor in the absence of comonomer in order to obtain high density LMW polyethylene having density $\geq 0.965$ g/cm$^3$ and MI$_2$ in the range of 10-1000 g/10 min for LMW. In order to obtain the target density and MI in the first reactor, the polymerization conditions are controlled and adjusted. The temperature in the first reactor ranges from 70-90°C, preferably 80-85°C. Hydrogen is fed to the first reactor so as to control the molecular weight of the polyethylene. The molar ratio of hydrogen to ethylene in the vapor phase can be varied depending up on the target MI. However, the preferred molar ratio ranges from 0.01-8.0, more preferably 0.01-6.0. The first reactor is operated at pressure between 250 and 900 kPa, preferably 400-850 kPa. An amount of hydrogen present in the vapor phase of the first reactor is in the range of 0.1-95% by mol, preferably 0.1-90% by mol.

Before being fed to the second reactor, the slurry obtained from the first reactor containing LMW polyethylene preferably in hexane may be transferred to a hydrogen removal unit which may have a flash drum connected with depressurization equipment preferably including one or the combination of vacuum pump, compressor, blower and ejector where the pressure in the flash drum is reduced so that volatile, unreacted gas, and hydrogen are removed from the slurry stream. The operating pressure of the hydrogen removal unit typically ranges from 103-145 kPa(abs), preferably 104-130 kPa(abs) in which 98.0 to 99.8% by weight of hydrogen can be removed from the slurry, preferably 98.0 to 99.5% by weight and most preferred 98.0 to 99.1 % by weight.

In this invention, when 98.0 to 99.8% by weight of hydrogen is removed from the slurry and the polymerization in the second reactor is performed under these conditions of hydrogen content, (very) high molecular weight polymer can be achieved. The polymerization conditions of the second reactor are notably different from that of the first reactor. The temperature in the second reactor ranges from 65-90∘C, preferably 68-80°C. The molar ratio of hydrogen to ethylene is not controlled in this reactor since hydrogen is not fed into the second reactor. Hydrogen in the second reactor is the hydrogen left over from the first reactor that remains in slurry stream after being flashed at the hydrogen removal unit. Polymerization pressure in the second reactor ranges from 100-3000 kPa, preferably 150-900 kPa, more preferably 150-400 kPa.

Hydrogen removal is the comparison result of the amount of the hydrogen present in the slurry mixture before and after passing through the hydrogen removal unit. The calculation of hydrogen removal is performed according to the measurement of gas composition in the first and the second reactor by gas chromatography.

After the substantial amount of hydrogen is removed to achieve the concentration described above, the slurry obtained in the hydrogen removal unit is transferred to the second reactor to continue the polymerization. In this reactor, ethylene can be polymerized with or without α-olefin comonomer to form HMW1 polyethylene in the presence of the LMW polyethylene obtained from the first reactor. The α-olefin comonomer that is useful for the copolymerization may include C$_{4-12}$, preferably 1-butene or 1-hexene.

After the polymerization in the second reactor, the slurry obtained therein is transferred to the third reactor to continue the polymerization.

The HMW2 is produced in the third reactor by polymerizing ethylene with optionally $\alpha$-olefin comonomer in the presence of LMW and HMW1 obtained from the first and second reactor. The $\alpha$-olefin comonomer that is useful for the copolymerization include $C_{4-12}$, preferably 1-butene and 1-hexene.

In order to obtain the, if desired, preferred density and $MI_2$ in the third reactor, the polymerization conditions may be controlled and adjusted. However, the polymerization conditions of the third reactor are notably different from that of the first and second reactor.

The temperature in the third reactor may range from 68-90°C preferably 68-80°C. Hydrogen is optionally fed to the third reactor so as to control the molecular weight of polyethylene. The molar ratio of hydrogen to ethylene can be varied depending up on the target MI. However, the preferred molar ratio ranges from 0.01-2.0. Polymerization pressure in the third reactor ranges from 250-900 kPa, preferably 250-600 kPa, and is controlled by the addition of inert gas such as nitrogen.

The final (free-flow) multimodal polyethylene composition (a) may be obtained by separating hexane from the slurry discharged from the third reactor.

A process for producing the multimodal polyethylene composition may comprise the steps of;

(I) polymerizing ethylene in an inert hydrocarbon medium in the first reactor in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene having a weight average molecular weight (Mw) between 20,000 to 90,000 g/mol wherein the low molecular weight polyethylene, respectively the medium molecular weight polyethylene, has a density at least 0.960 g/cm$^3$, and the low molecular weight polyethylene has $MI_2$ in the range between 10 to 1,000 g/10 min and the medium molecular weight polyethylene has $MI_2$ in the range between 0.1 to 10 g/10 min;

(II) removing hydrogen, in the hydrogen removal unit, 98.0 to 99.8% by weight, such as 98.0 to 99.1% by weight of the hydrogen comprised in a slurry mixture obtained from the first reactor at a pressure in the range of 103-145 kPa (abs) and transferring the obtained residual mixture to the second reactor;

(III) polymerizing ethylene and optionally $C_4$ to $C_{12}$ $\alpha$-olefin comonomer in the second reactor in the presence of a catalyst system, selected from Ziegler-Natta catalyst or metallocene, and in the presence of hydrogen in an amount obtained in step (b) to obtain a first high molecular weight polyethylene having a weight average molecular weight between 140,000 to 1,400,000 g/mol in the form of a homopolymer, or copolymer and transferring a resultant mixture to the third reactor; and

(IV) polymerizing ethylene, and optionally $C_4$ to $C_{12}$ $\alpha$-olefin comonomer in the third reactor in the presence of a catalyst system, selected from Ziegler-Natta catalyst or metallocene, and hydrogen, wherein the amount of hydrogen in the third reactor is in a range of 0.1-70% by mol, preferably 0.1-60% by mol, with respect to the total gas present in the vapor phase in the third reactor or optionally substantial absence of hydrogen to obtain a second high molecular weight polyethylene having a weight average molecular weight between 130,000 to 1,100,000 g/mol homopolymer, or copolymer.

"Substantially absence" in this regard means that hydrogen is only comprised in the third reactor in an amount which cannot be avoided by technical means.

The multimodal polyethylene composition of the invention may be produced in a multistage process wherein fractions (A), (B) and (C) are produced in subsequent stages. In such a case, the properties of the fractions produced in the second step or the third step (or further steps) of the multistage process can either be inferred from polymers which are separately produced in a single stage by applying identical polymerization conditions (e.g. identical temperature, partial pressures of the reactants/diluents, suspension medium, reaction time) with regard to the stage of the multistage process in which the fraction is produced, and/or by using a catalyst on which no previously produced polymer is present. Alternatively, the properties of the fractions produced in a higher stage of the multistage process may also be calculated, e.g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the weight average molecular weight (Mw) is by applying a deconvolution process using either Microsoft Excel spreadsheet, or any other calculation programs. In the deconvolution process subtraction of the respective signals is carried out.

The high density polyethylenes (HDPEs) produced in such multistage process can be designated as "in-situ" blends. The resulting end product consists of an intimate mixture of the polymers from the three or more reactors, the different molecular-weight-distribution curves of these polymers together forming a molecular-weight-distribution curve having a broad maximum or two or three or more maxima.

**Definitions and Measurement Methods**

As used herein the term "polyethylene" refers to a polymer that comprises at least 50 % wt, still more preferably at least 75 % wt, still more preferably at least 85 % wt and yet more preferably at least 90 % wt units derived from ethylene. The remaining part of the polyethylene may be formed by copolymers, for example $C_4$ to $C_{10}$ $\alpha$-olefin, such as 1-butene or 1-hexene.

As used herein the term "multimodal" refers to a polymer comprising a plurality of components or fractions, which have been produced under different polymerization conditions and/or by using a multisite catalyst system (e.g. a system having more than one type of active site) in one stage or step and/or by using two or more different catalysts in a polymerization stage or step resulting in different weight average molecular weights and molecular weight distributions for the components and/or in different comonomer contents. The prefix "multi" refers to the number of different components present in the polymer. Thus, for example, a polymer consisting of three components is called "trimodal".

As used herein the term "multimodal composition" refers to a composition comprising a plurality of components or fractions, which are each different in composition. Preferably the components or fractions each have a different constituent composition. Thus, for example, a composition comprising an ethylene homopolymer, an ethylene copolymer comprising 0.1 % wt comonomer and an ethylene copolymer comprising 0.5 % wt comonomer is a multimodal composition, specifically a trimodal composition.

The additives may be added to the PCR, the bimodal polyethylene composition, the trimodal polyethylene compositionor during blending of PCR and/or bimodal polyethylene composition and/or trimodal polyethylene.

In addition, the composition can contain other additives to enhance thermal and/or UV stability during manufacturing, storing of the material, or during processing and end-use, for example antioxidant, UV absorber, UV stabilizer, and also neutralizer. The total composition of one or more additives content is in the range of 0.01-5 %wt.

Phenolic antioxidants are the most widely used antioxidants for polymer. In this invention, primary and secondary antioxidants are normally selected from sterically hindered phenols, organic phosphites or phosphonites and mixtures thereof. The concentration normally is at least 0.2%wt.

UV stabilizer and absorber are generally used to prevent or slow down degradation caused by exposure to ultraviolet radiation. Exposure to sunlight causes products to break down over time. These stabilizers can be added in lower concentrations because only a small amount is needed to be effective. The concentration normally is within the range of 0.2%wt.

The use of additives, such as metal stearates to neutralize acid residues has been selected from the acid scavenger or neutralizer: zinc stearate, calcium stearate, zinc oxide, and hydrotalcite. The amount of neutralizer used varies to not less than 0.05%wt.

Molecular weight and Polydispersity index (PDI): The weight average molecular weight (Mw), the number average molecular weight (Mn) and the Z average molecular weight (Mz) in g/mol were analyzed using gel permeation chromatography (GPC). Polydispersity index was calculated by Mw/Mn. Around 8 mg of sample was dissolved in 8 ml of 1,2,4-trichlorobenzene at 160°C for 90 min. Then the sample solution, 200 $\mu$L, was injected into the high temperature GPC with $IR_5$, an infrared detector (Polymer Char, Spain) with flow rate of 0.5 ml/min at 145°C in column zone and 160°C in detector zone. The data was processed by GPC One® software, Polymer Char, Spain.

Melt flow index (MI2): Melt flow index (MI2) (melt flow rate) of polymer was measured according to ASTM D 1238 and indicated in g/10 min that determines the flowability of polymer under testing condition at 190°C with load 2.16 kg.

Density: Density was measured by observing the level to which a pellet sinks in a liquid column gradient tube, in comparison with standards of known density. This method is determination of the solid plastic after annealing at 120°C following ASTM D 1505.

Comonomer content: The comonomer content was determined by high resolution $^{13}$C-NMR. 13C-NMR spectra were recorded by 500 MHz ASCENDTM, Bruker, with cryogenic 10 mm probe. TCB was used as major solvent with TCE-d2 as locking agent in the ratio of 4:1 by volume. The NMR experiments were carried on at 120°C, and the inverse gate 13C (zgig) of pulse program with 90° for pulse angle were used. The delay time (Di) was set to 10 seconds for full-spin recovery. Finally, the comonomer content is calculated in %mol unit with respect to the total amount of monomer in the polyethylene composition.

Tensile strength at yield (TSY): The tensile testing was performed by elongating a specimen and measured the load carrier following the specimen dimension using Universal testing machine. A variety of tensile properties can be extracted from the stress-strain curve. Stress at yield (in MPa) was determined on the same samples according to ISO 527-2. The measurement was conducted at 23 °C temperature with an elongation rate of 50 mm/min.

Tensile modulus : The stiffness of materials were tested on compressed specimen. The test was performed follow ISO 527-2 at 23 °C. Flat specimens with thickness of 4 mm was determined at a crosshead speed of 1 mm/min. The stress and strain was recorded and calculated as tensile modulus according to ISO method.

Tensile modulus (Chord): The sample was compressed follow to ISO 17855-2. The measurement was determined according to ISO 527. The tensile modulus (Chord) is the slope of the chord drawn between any two specified points on the stress-strain curve below the maximum stress a material can withstand without permanent strain upon release of the stress.

Tensile strength at break (TSB): The tensile strength at break is the maximum stress that a material can withstand while being stretched or pulled before breaking. The tensile testing was performed by elongating a specimen and measured the load carrier following the specimen dimension using Universal testing machine. The tensile strength at break is determined according to ISO 527 at 23 °C temperature with an elongation rate of 50 mm/min.

Elongation at break (ELB): Elongation at break is the measure of a materials ductility. This measurement shows how much a material can be stretched, as a percentage of its original dimensions, before it breaks. The elongation at break is determined according to ISO 527 at 23 °C temperature with an elongation rate of 50 mm/min

Strain hardening modulus : The testing samples were compressed into thin sheet thickness of 0.3 mm. The compression was done at the temperature of 180 °C. After pressing, the samples were annealed at 120 °C for 1 hour. Then, slowly cool down to the room temperature at the rate of lower than 2 °C/min. The specimens are punched follow ISO 1872-2. The testing determined according to ISO 18488:2015, the temperature of 80 °C at constant speed 20 mm/min. The calculation of <Gp> is performed typically between draw ratio 8 and 12. The strain hardening modulus <Gp> is calculated as the average difference quotient: The average runs over all N difference quotients:

$$<Gp> = \frac{1}{N} \sum_{i=1}^{N} \frac{\sigma_{i+1} - \sigma_i}{\lambda_{i+1} - \lambda_i}$$

Charpy impact strength: Charpy impact strength is determined according to ISO 179 at -20°C, 0°C, and 23°C, respectively, and shown in the unit kJ/m$^2$.

Viscosity at angular frequency 0.01 [1/s] ($\eta_{0.01\eta}$): Rheological parameters are determined by using controlled stress rheometer model MCR-301 from Anton-Par. The geometry is Plate-Plate 25 mm diameter at the measurement gap 1 mm. The dynamic oscillatory shear performs at angular frequency ($\omega$) 0.01-600 rad/s at 190 °C under nitrogen atmosphere. The sample preparation is performed to circular disk 25 mm by compression molding at 190 °C. Viscosity at 0.01 [1/s] ($\eta_{0.01}$) is obtained from complex viscosity at a specific shear rate 0.01 [1/s].

Isothermal Crystallization Half-Time (ICHT): The isothermal crystallization half-time at 123 °C was measured by DSC under specific condition to determine the crystallization rate of the sample. The sample was heated from 30 °C to 200 °C at a heating rate of 50 °C/min and held for 5 min. Then, it was cooled down to 123 °C at cooling rate 50 °C/min and held for 60 min.

Full Notch Creep Test (FNCT): The full notch creep test according to ISO 16770 was the preferred way of measuring the stress crack resistance of a polymer at constant load of 5.78 MPa at 50 °C in 2% Arkopal solution.

**Examples**

As the "booster in accordance with the present invention", that is as multimodal polyethylene composition in accordance with the invention a trimodal polyethylene composition was prepared as follows:

Preparation of the trimodal polyethylene

A homopolymer was polymerized at 80 °C, 800 kPa in a system containing hydrogen in an amount of 0.3% vol to obtain a low molecular weight polyethylene portion at 45 weight percent of total polymer in a first reactor before transferring the polymer to a hydrogen removal unit. Reactant slurry polymer was transferred into the hydrogen removal unit to separate the unreacted mixture from the polymer. The residual of hydrogen from first reactor was removed from the slurry to an extend of 98.8% by weight. The residue was introduced into a second reactor to produce a first high molecular weight polymer at 20 weight percent of total polymer. Here, a copolymerization was carried out by feeding 1-butene 3.8%wt at 70 °C, 250 kPa. Lastly, the obtained composition comprising bimodal copolymer from the second reactor was transferred to a third reactor to create a second high molecular weight polyethylene copolymer portion at 70 °C, 400 kPa with 1-butene and hydrogen to adjust the MFR and density.

As the "virgin resin" of trimodal polyethylene and bimodal polyethylene prepared as follows:

Preparation bimodal polyethylene composition

The manufacture of the bimodal polymer composition was carried out in a slurry with solvent, n-hexane, diluent through two-stage polymerization in cascade reactors connected in series.

The polymerization catalyst included coordination catalysts of a transition metal, Ziegler-Natta (ZN). The catalyst was supported with conventional support material including magnesium chloride or silica. Preferably the catalyst is a ZN catalyst, most preferably a $MgCl_2$-based ZN catalyst.

The ethylene was polymerized in a first reactor in order to obtain a polyethylene homopolymer fraction that is the low average molecular weight (LMW) fraction. The LMW fraction was produced at temperature 80 °C, 800 kPa. Hydrogen was fed to the first reactor so as to control the LMW to have a density >0.965 $g/cm^3$ and $MFR_2$ in the range of 100-500 g/10 min. In the second reactor, ethylene was polymerized with $\alpha$-olefin comonomer to form high molecular weight (HMW) polyethylene. Polyethylene was polymerized in the presence of the LMW polyethylene obtained from the first reactor which was transferred to continue the reaction with the copolymerization of 1-butene to control the density of >0.950 $g/cm^3$, the MFR2 in the range of 0.4 -0.7 g/10 min. The polymerization conditions of the second reactor are notably different from that of the first reactor. The temperature in the second reactor is 70 °C. Polymerization pressure in the second is 400 kPa.

As the PCR-resin, cap waste from waste management system in the close loop was used that is obtained from mechanical processing(s) of the disposed used plastic products of high-density polyethylene source having density of 0.955 $g/cm^3$. Furthermore, the post-consumer resin has a $MI_2$ of 1.31 g/10 min determined according to ASTM D1238 at 190°C with load 2.16 kg. Specifically, the post-consumer resin was selected from red colored plastic cap sources selected from carbonated soft drink plastic cap.

As a "comparative booster composition" EL5100G (trade name is Elite 5100G) was used, which is a C8-comonomer-containing LLDPE known in the art as suitable to boost the stiffness of PE resins.

Table 1 shows the properties of the raw materials used for preparing PCR-containing resin compositions.

Table 1:

| Properties | Unit | Raw Materials | | | |
|---|---|---|---|---|---|
| | | PCR resin | virgin bimodal polyethylene resin | Multimodal polyethylene composition | Comparative booster resin (Elite 5100G) |
| **Melt Index** ($MI_2$) | g/10 min | 1,31 | 0,80 | 0,04 | 0,82 |
| **Density (annealed at 100 °C)** | (g/cm3) | 0,955 | 0,956 | 0,943 | 0,922 |
| Tensile Sheet Test (Compression) | | | | | |
| Tensile stress at yield | MPa | 25,1 | 26,2 | 20,1 | 10,8 |
| Tensile stress at break | MPa | 14,0 | 14,8 | 25,4 | 21,5 |
| Elongation at yield | % | 9,5 | 8,2 | 17,4 | 8,4 |
| Elongation at break | % | 435 | 461 | 743 | 540 |
| **Tensile Modulus (Chord)** | MPa | 969 | 1033 | 782 | NA |
| Charpy Impact (compression) | | | | | |
| Charpy Impact (-20 C) | kJ/m² | 4,1 | NA | 12,0 | 66,2 |
| Charpy Impact (0 C) | kJ/m² | 4,4 | NA | 23,5 | 90,08 |
| Charpy Impact (23 C) | kJ/m² | 6,6 | NA | 28,3 | 64,8 |
| Strain hardening Gp (Cap condition) | | | | | |

(continued)

| Properties | Unit | Raw Materials | | | |
|---|---|---|---|---|---|
| | | PCR resin | virgin bimodal polyethylene resin | Multimodal polyethylene composition | Comparative booster resin (Elite 5100G) |
| Average Gp | - | NA | 18,2 | 46,3 | 46,3 |

The PCR-resin, the virgin resin and the respective booster were blended and pelletized through Haake Rheomex 19/25 OS single screw extruder L/D 25 at a temperature setting 170 - 190°C, screw speed 80 rpm to prepare resin compositions having the compositions as shown in Table 2.

Table 2 shows the composition of resin compositions IE1 and IE2 in accordance with the invention, that is, including the multimodal polyethylene composition ("booster composition") according to the invention and comparative resin compositions CE1 and CE2 including a booster composition in accordance with the prior art.

Table 2:

| Raw Material | Type | Dosage (parts by weight) | | | |
|---|---|---|---|---|---|
| | | IE1 | IE2 | CE1 | CE2 |
| PCR-resin: Cap waste from waste management system in the close loop (no expolring to sunlight and/or bad environmente) | PCR Resin | 30 | 30 | 30 | 30 |
| Bimodal polyethylene resin | Virgin resin | 55 | 50 | 55 | 50 |
| EL5100G (trade name is Elite 5100G) | Comparative booster | | | 15 | 20 |
| Multimodal polyethylene composition ("booster composition according to the present invention | booster composition according to the present invention | 15 | 20 | | |
| Additive | 1st Antioxidant (3,5-di-tert-butyl-4-hydroxy propionate) | 0,05 | 0,05 | 0,05 | 0,05 |
| Additive | 2nd Antioxidant (tris(2,4-ditert-butylphenyl) phosphite) | 0,1 | 0,1 | 0,1 | 0,1 |
| | | 100,15 | 100,15 | 100,15 | 100,15 |

Table 3 shows the properties of resin compositions IE1 and IE2 in accordance with the invention, that is, including the multimodal polyethylene composition ("booster composition" according to the invention and comparative resin compositions CE1 and CE2 including a booster composition in accordance with the prior art.

Table 3:

| Properties | Unit | IE1 | IE2 | CE1 | CE2 |
|---|---|---|---|---|---|
| Melt Index (MI)-ASTM | g/10 min | 0,61 | 0,53 | 0,95 | 0,94 |
| Density (anneal 100 C) | (g/cm3) | 0,956 | 0,956 | 0,950 | 0,948 |
| Tensile Sheet Test (Compression) | | | | | |
| Tensile strength at yield | MPa | 26,3 | 26,2 | 23,1 | 22,2 |
| Tensile strength at break | MPa | 14,7 | 14,8 | 15,1 | 16,9 |
| Elongation at yield | % | 0,8 | 6,2 | 6,4 | 2,3 |
| Elongation at break | % | 776 | 681 | 680 | 713 |

(continued)

| Properties | Unit | IE1 | IE2 | CE1 | CE2 |
|---|---|---|---|---|---|
| Tensile Modulus (Chord) | MPa | 1100 | 1225 | 922 | 925 |
| Strain hardening modulus | | 12,2 | 18,5 | 20,2 | 21,9 |

As it can be seen from Table 3, the inventive resin compositions using the multimodal polyethylene compositions in accordance with the invention instead of the booster known in the art have improved stiffness, especially have improved tensile strength at yield and improved tensile modulus representing stiffness property that IE1 and IE2 give this property that CE1 and CE2 . In addition these inventive examples of IE1 and IE2 maintain stiffness and balance strain hardening modulus that is suitable for cap and closure.

The features disclosed in the foregoing description and in the dependent claims may, both separately and in any combination thereof, be material for realizing the aspects of the disclosure made in the independent claims, in diverse forms thereof

**Claims**

1. A multimodal polyethylene composition comprising;

   (A) 40 to 60 percent by weight of a low molecular weight polyethylene, with respect to the total weight of the multimodal polyethylene composition, wherein the low molecular weight polyethylene is a homopolymer; and the low molecular weight polyethylene has a weight average molecular weight (Mw) from 20,000 to 90,000 g/mol measured by Gel Permeation Chromatography,
   (B) 10 to 30 percent by weight of a first high molecular weight polyethylene, with respect to the total weight of the multimodal polyethylene composition, wherein the first high molecular weight polyethylene is a homopolymer or a copolymer; and the first high molecular weight polyethylene has a weight average molecular weight (Mw) from 140,000 to 1,400,000 g/mol, measured by Gel Permeation Chromatography; and
   (C) 15 to 40 percent by weight of a second high molecular weight polyethylene, with respect to the total weight of the multimodal polyethylene composition, wherein the second high molecular weight polyethylene is a homopolymer or a copolymer, and the second high molecular weight polyethylene has a weight average molecular weight (Mw) of from 130,000 to 1,100,000 g/mol, measured by Gel Permeation Chromatography;

   wherein
   the first high molecular weight polyethylene differs from the second high molecular weight polyethylene with respect to the weight average molecular weight thereof.

2. The multimodal polyethylene composition according to claim 1, wherein the low molecular weight polyethylene has a $MI_2$ from 500 to 1,000 g/10 min according to ASTM D 1238.

3. The multimodal polyethylene composition according to claim 1 or 2, wherein the multimodal polyethylene composition has a molecular weight distribution from 13 to 33.

4. The multimodal polyethylene composition according to any of the preceding claims, wherein the multimodal polyethylene composition has a weight average molecular weight from 150,000 to 400,000 g/mol measured by Gel Permeation Chromatography.

5. The multimodal polyethylene composition according to any of the preceding claims, wherein the multimodal polyethylene composition has a density from 0.935 to 0.965 g/cm$^3$ according to ASTM D 1505.

6. The multimodal polyethylene composition according to any of the preceding claims, wherein the multimodal polyethylene composition has a $MI_2$ from 0.01 to 0.60 g/10 min, preferably from 0.01 to 0.50 g/10 min according to ASTM D 1238.

7. The multimodal polyethylene composition according to any of the preceding claims, wherein the multimodal polyethylene composition has a Z average molecular weight from 1,000,000 to 3,000,000 g/mol measured by Gel Permeation Chromatography.

8. The multimodal polyethylene composition according to any of the preceding claims, wherein the multimodal polyethylene composition has a number average molecular weight from 5,000 to 15,000 g/mol measured by Gel Permeation Chromatography.

9. The multimodal polyethylene composition according to any of the preceding claims, wherein low molecular weight polyethylene has a density from 0.962 to 0.966 g/cm$^3$ according to ASTM D 1505.

10. Resin composition, comprising:

(a) 5 to 45 percent by weight, with respect to the total weight of the resin composition, of the multimodal polyethylene composition according to any of the preceding claims; and
(b) 5 to 45 percent by weight, with respect to the total weight of the resin composition, of a post-consumer resin.

11. Resin composition according to claim 10, wherein the resin composition further comprises (c) 10 to 90 percent by weight, with respect to the total weight of the resin composition, of a virgin resin.

12. Resin composition according to claim 11, wherein the virgin resin is a bimodal polyethylene composition.

13. Resin composition according to any of the claims 10 to 12, wherein the resin composition further comprises 0.001 to 2 percent by weight, with respect to the total weight of the resin composition, of an additive, wherein the additive is preferably an antioxidant.

14. Method for preparing a resin composition comprising a post-consumer resin, the method comprising a step of blending the multimodal polyethylene composition according to any of the claims 1 to 9 and the post-consumer resin.

15. Article comprising the multimodal polyethylene composition according to any of the claims 1 to 9 and a post-consumer resin.

Europäisches
Patentamt

European
Patent Office

Office européen
des brevets

# EUROPEAN SEARCH REPORT

Application Number

EP 22 20 2496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/092264 A1 (BOREALIS AG [AT]; BURYAK ANDREY [AT] ET AL.) 4 August 2011 (2011-08-04) | 1-9 | INV. C08L23/06 C08L23/04 |
| A | * claim 1 * * example 10; tables 2-4 * * page 1, line 3 - line 8 * * page 8, line 8 - line 10 * * page 8, line 12 * | 10-15 | C08L23/08 C08F2/00 C08F110/02 C08F210/02 |
| | ----- | | |
| X | EP 3 530 675 A1 (THAI POLYETHYLENE CO LTD [TH]; SCG CHEMICALS CO LTD [TH]) 28 August 2019 (2019-08-28) | 1-9 | |
| A | * claim 7 * * tables 1,2 * * paragraphs [0001], [0002], [0028], [0029], [0030], [0043], [0044] * | 10-15 | |
| | ----- | | |
| X | WO 2013/113797 A1 (NORNER AS [NO]) 8 August 2013 (2013-08-08) | 1-9 | |
| A | * claims 36,44,58,59,61,62 * * table 3 * * page 10, lines 5-12,26-27,30 * * page 11, line 11 * * page 9, lines 23-29 * | 10-15 | **TECHNICAL FIELDS SEARCHED (IPC)** C08L C08F |
| | ----- | | |

The present search report has been drawn up for all claims

| Place of search | Date of completion of the search | Examiner |
|---|---|---|
| Munich | 3 March 2023 | van Bergen, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 2496

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2023

| Patent document cited in search report | | Publication date | Patent family member(s) | | Publication date |
|---|---|---|---|---|---|
| WO 2011092264 | A1 | 04-08-2011 | CN | 102869717 A | 09-01-2013 |
| | | | EP | 2354183 A1 | 10-08-2011 |
| | | | KR | 20120123488 A | 08-11-2012 |
| | | | RU | 2012135068 A | 10-03-2014 |
| | | | US | 2013030125 A1 | 31-01-2013 |
| | | | WO | 2011092264 A1 | 04-08-2011 |
| EP 3530675 | A1 | 28-08-2019 | BR | 112019002966 A2 | 21-05-2019 |
| | | | CA | 3033007 A1 | 15-03-2018 |
| | | | CN | 108350097 A | 31-07-2018 |
| | | | CN | 114805651 A | 29-07-2022 |
| | | | EP | 3293205 A1 | 14-03-2018 |
| | | | EP | 3530675 A1 | 28-08-2019 |
| | | | ES | 2758793 T3 | 06-05-2020 |
| | | | ES | 2883800 T3 | 09-12-2021 |
| | | | HU | E047204 T2 | 28-04-2020 |
| | | | HU | E055304 T2 | 29-11-2021 |
| | | | JP | 7092718 B2 | 28-06-2022 |
| | | | JP | 7092749 B2 | 28-06-2022 |
| | | | JP | 2019214734 A | 19-12-2019 |
| | | | JP | 2019526687 A | 19-09-2019 |
| | | | KR | 20190055107 A | 22-05-2019 |
| | | | KR | 20190115120 A | 10-10-2019 |
| | | | MY | 190182 A | 31-03-2022 |
| | | | PT | 3293205 T | 31-10-2019 |
| | | | PT | 3530675 T | 23-07-2021 |
| | | | RU | 2019110777 A | 12-10-2020 |
| | | | WO | 2018046604 A1 | 15-03-2018 |
| WO 2013113797 | A1 | 08-08-2013 | CN | 104204068 A | 10-12-2014 |
| | | | EP | 2809717 A1 | 10-12-2014 |
| | | | EP | 2930205 A1 | 14-10-2015 |
| | | | ES | 2596272 T3 | 05-01-2017 |
| | | | ES | 2636781 T3 | 09-10-2017 |
| | | | GB | 2498936 A | 07-08-2013 |
| | | | HU | E030728 T2 | 28-06-2017 |
| | | | HU | E036018 T2 | 28-06-2018 |
| | | | JP | 6272237 B2 | 31-01-2018 |
| | | | JP | 6820249 B2 | 27-01-2021 |
| | | | JP | 2015505573 A | 23-02-2015 |
| | | | JP | 2018104707 A | 05-07-2018 |
| | | | JP | 2021050359 A | 01-04-2021 |
| | | | KR | 20140120358 A | 13-10-2014 |
| | | | KR | 20190133791 A | 03-12-2019 |
| | | | KR | 20210003306 A | 11-01-2021 |
| | | | PL | 2809717 T3 | 31-01-2017 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 20 2496

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2023

| Patent document cited in search report | Publication date | Patent family member(s) | Publication date |
|---|---|---|---|
| | | PT 2809717 T | 20-10-2016 |
| | | PT 2930205 T | 10-08-2017 |
| | | SG 10201606270T A | 29-09-2016 |
| | | SG 10201913063X A | 30-03-2020 |
| | | SG 11201404520U A | 30-10-2014 |
| | | WO 2013113797 A1 | 08-08-2013 |

------------------------------------------------------------------------

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10894877 B2
- US 20210095107 A1
- EP 3074464 B1
- EP 3293212 A1